# EUROPEAN PATENT APPLICATION

(11) **EP 4 332 615 A1**
(43) Date of publication of application: **06.03.2024**
(21) Application number: 23193076.9
(22) Date of filing: 24.08.2023
(51) Int. Cl.: G01S 7/40, G01S 7/00, G01S 7/41, G01S 7/48, G01S 7/497, G01S 13/42, G01S 13/86, G01S 13/931, G01S 17/42, G01S 17/931

(54) **SENSOR CALIBRATION AND LOCALIZATION USING KNOWN OBJECT IDENTIFICATION**

(30) Priority: 26.08.2022 US 202217897042
(71) Applicant: Trimble Inc., Sunnyvale, CA 94085 (US)
(72) Inventor: STERLING, Thomas, Sunnyvale, CA 94085 (US); SIGHTS, Brandon, Sunnyvale, CA 94085 (US)
(74) Representative: AWA Sweden AB

(57) **Abstract**

Disclosed are a method and apparatus for calibrating a sensor. An object is placed in a field of view of the sensor at a known location. The object is moved (e.g., rotated) in a known manner. Data from the sensor is processed to detect an object image moving in the known manner. An apparent location of the object is determined from the object image. The apparent location is compared to the known location of the object to determine an offset. The offset is stored and used to adjust future detected locations of objects.

## Description

### BACKGROUND OF THE INVENTION

The present invention relates to autonomous navigation, and in particular such navigation for farm and construction or off-road equipment and calibration of sensors used for navigation and obstacle detection.

Autonomous navigation for vehicles requires sensors that can detect the location of objects relative to the vehicle. The vehicle can have a localization sensor, such as a Global Navigation Satellite System (GNSS). The sensors, such as radar, camera and lidar are mounted at different locations on the vehicle, and their location relative to the localization sensor needs to be determined. Some vehicles, such as farm equipment, operate in rough environments with a lot of vibration, or cluttered environments, where sensors may run into objects such as trees that can affect the mounting of the sensor and the direction it is pointing. In addition, during manufacturing and/or assembly, the sensor may not end up pointed in exactly the desired direction.

It would be desirable to have a calibration system to adjust for any movement of the sensor and also determine the sensor's location relative to a localization sensor. As such, new systems, methods, and other techniques are needed to address these and other issues.

Unless otherwise indicated herein, the materials described in this section of the Specification are not prior art to the claims in this application and are not admitted to be prior art by inclusion in this section.

### BRIEF SUMMARY OF THE INVENTION

In embodiments, a method and apparatus are provided for calibrating a sensor or suite of sensors. An object is placed in a field of view of the sensor at a known location. The object is moved in a known manner. Data from the sensor is examined to detect an object image moving in the known manner. An apparent location of the object is determined from the sensor output. The apparent location is compared to the known location of the object to determine an offset. The offset is stored and used to adjust future detected locations of obj ects.

In embodiments, the object is part of a calibration system and the sensor is mounted on a vehicle. The known location of the object is determined by communication between the calibration system and a localization sensor (e.g., a GNSS sensor) mounted on the vehicle. The calibration system with the object is moved to multiple known locations for the determination of multiple offsets at each of the multiple known locations.

An advantage of embodiments of the invention is that calibration can easily be done in the factory, at a showroom or in the field. The calibration can be repeated over time as needed.

In embodiments, the object is moved at one or more frequencies, such as by rotation. The sensor is a radar sensor in one embodiment. The object is detected by filtering at one or more frequencies, which includes running a Fourier Transform on a sequence of frames from the sensor to detect peaks at the known frequencies. The object is chosen as being a radar reflector (e.g., a cube) with high returned energy in the frequency band of the sensor. The object in one embodiment is mounted on a calibration apparatus and is rotated.

This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings, and each claim.

The foregoing, together with other features and examples, will be described in more detail below in the following specification, claims, and accompanying drawings.

The terms and expressions that have been employed are used as terms of description and not of limitation, and there is no intention in the use of such terms and expressions of excluding any equivalents of the features shown and described or portions thereof. It is recognized, however, that various modifications are possible within the scope of the systems and methods claimed. Thus, although the present system and methods have been specifically disclosed by examples and optional features, modification and variation of the concepts herein disclosed should be recognized by those skilled in the art, and that such modifications and variations are considered to be within the scope of the systems and methods as defined by the appended claims.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIG. 1 is a diagram of a sensor on a vehicle in need of calibration, according to embodiments.
FIG. 2A is a diagram of a corner reflector calibration object for a sensor, according to embodiments.
FIG. 2B is a diagram of a corner reflector illustrating the reflection angles, according to embodiments.
FIG. 3 is a diagram of a calibration apparatus according to embodiments.
FIG. 4A is a diagram of the X, Y distribution grid of radar reflections for a static reflector. FIG. 4B is a graph of SNR v. time and a graph of RCS v. time for a static object, according to embodiments.
FIG. 5A is a diagram of the X, Y distribution grid of radar reflections for a rotating reflector. FIG. 5B is a graph of SNR v. time and a graph of RCS v. time for a rotating object, according to embodiments.
FIG. 6A is a diagram of a lidar reflector; FIG. 6B is a graph of amplitude v. frequency for the lidar reflector, and FIG. 6C is an X, Y graph showing a point cloud returned by a lidar scanner, according to embodiments.
FIG. 7 is a diagram of camera targets for calibration, according to embodiments.
FIG. 8 is block diagram illustrating the electronics for the calibration, according to embodiments.
FIG. 9 is flow chart illustrating the calibration process, according to embodiments.
FIG. 10 illustrates a simplified computer system for implementing vehicle collision avoidance controls, according to embodiments.

### DETAILED DESCRIPTION OF THE INVENTION

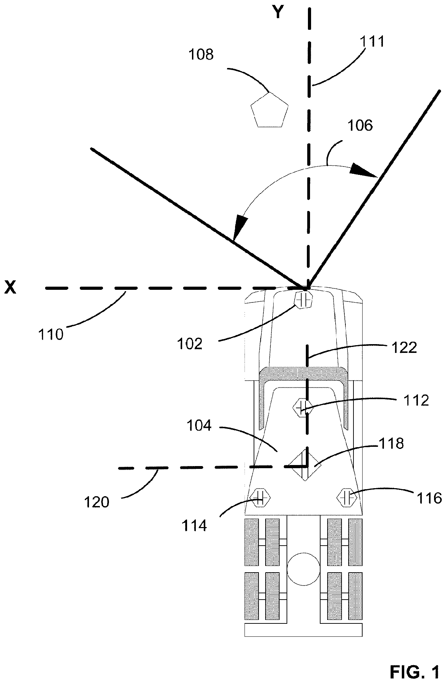

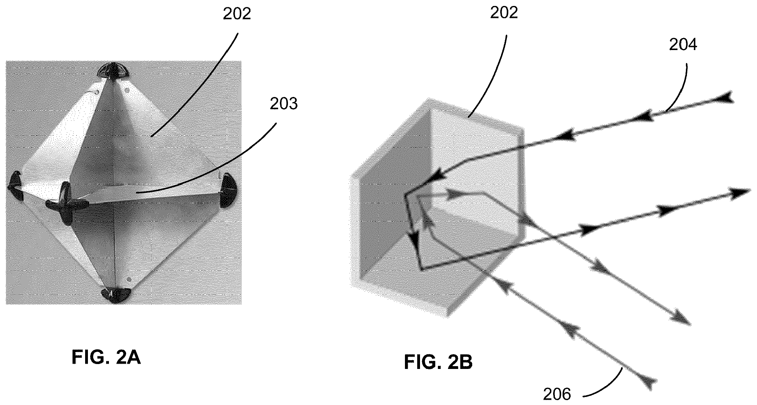

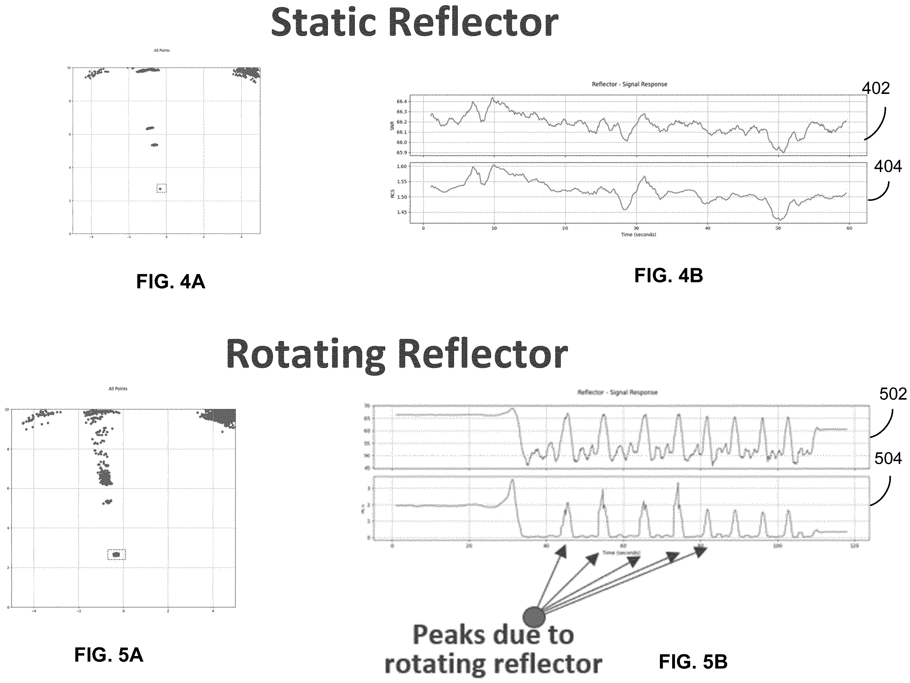

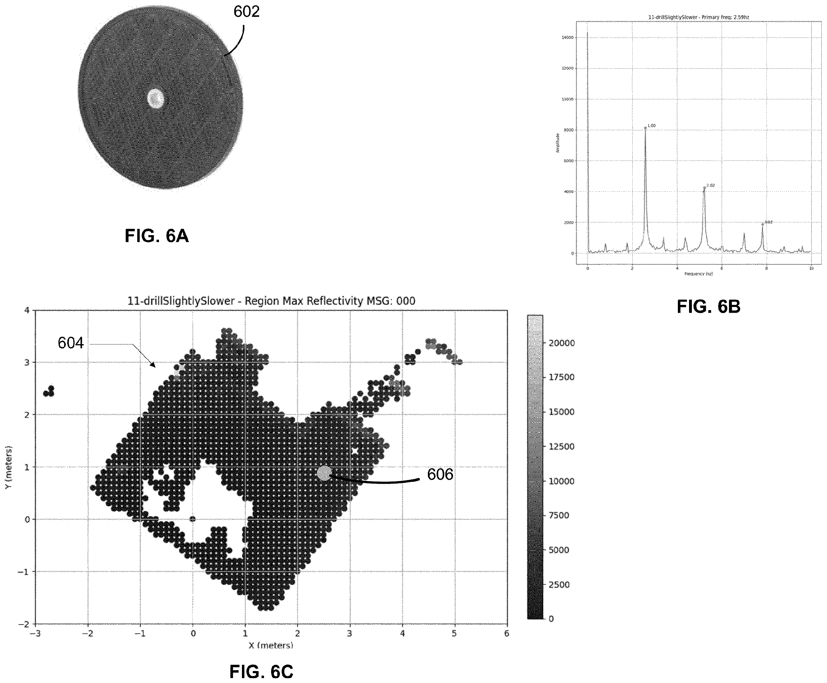

Disclosed are techniques for calibrating sensors on a vehicle, in particular an off-road vehicle. FIG. 1 illustrates a vehicle 104, such as an off-road vehicle or farm equipment, with a misaligned sensor 102 that needs calibration. Calibrating a radar sensor can be done using a radar reflector or corner reflector to provide an easily identifiable object. However, calibration is still problematic because radar sensors have a high degree of noise which makes it difficult to filter. Data that is returned is low fidelity and sparse, and thus it can be difficult to distinguish between objects in a radar return. FIGS. 2-3 illustrate highly reflective radar reflectors that can be used for calibration. The radar reflector can be rotated at a known frequency so that it is more easily detected with FFT filtering, as illustrated in FIGS 5A-B. To correlate the location, a lidar (LIght Detection And Ranging) sensor with a lidar target as shown in FIGS. 6A-C can be added, and used to correlate the location of the radar reflector. A camera can also be used to detect the known motion of the object to get the correlation of all sensors in the sensor suite.

### Location of Sensor on Vehicle

FIG. 1 is a diagram of a sensor, on a vehicle, in need of calibration, according to embodiments. A sensor 102 is mounted on a vehicle 104 with a field of view indicated by angle 106 which is misaligned to the right. The sensor should be aligned to point straight ahead with respect to an X, Y grid 110, 111. Detected objects are given X, Y, Z, positions within this grid. With such a misalignment, an object 108 will be detected, but its position as provided by sensor 102 will be off from its true location in grid 110. Such a misalignment can occur with a slight error during manufacturing, or the sensor (or the part it is mounted on) can shift position during the operation of the vehicle.

In some embodiments, additional sensors 112, 114 and 116 are provided. Any number of sensors could be provided. The sensors can be a mix of sensors, including radar, lidar and camera sensors. Each sensor could potentially be misaligned, and they could be misaligned with respect to each other.

In embodiments, a GNSS 118 or other localization sensor is mounted on vehicle 104. In order to relate what the other sensors see to the GNSS provided location, the location of the other sensors on vehicle 104 relative to GNSS 118 needs to be determined. GNSS 118 has an x, y coordinate system (120, 122) based on its mounting position, which is offset from the X, Y coordinate system 110, 111. Using a GNSS or other localization device on object 108, its position relative to GNSS sensor 118 is determined. Each sensor's location relative to object 108 is then determined. The offset in positions relative to the GNSS device 118 is then calculated. Embodiments thus provide not only a calibration method for determining the direction a sensor is pointing, but also an automatic calibration of the location of each sensor relative to the GNSS device, which is the designated vehicle frame location for the vehicle.

Calibrating a radar sensor can be particularly problematic. Radar sensors have a high degree of noise which makes it difficult to filter. It can thus be difficult to distinguish between objects in a radar return signal. Normally in these returns, there is information about SNR (signal-to-noise ratio) and RCS (radar cross section).

FIG. 2A is a diagram of a corner reflector calibration object for a sensor, according to embodiments. The object 202 has a highly reflective RCS and a high SNR. This makes it easier to detect amongst other objects and background. Object 202 has four tetrahedrons providing corners on top and four on the bottom, separated by a divider 203, with open sides of the tetrahedrons. This triangular shape is an effective reflector of electromagnetic signals.

FIG. 2B is a diagram of a corner reflector illustrating the reflection angles, according to embodiments. The paths of radar signals 204 and 206 are illustrated as bouncing off multiple surfaces of the tetrahedrons of object 202 FIG. 2A and returning to the position of the radar emitter.

In addition to selecting a calibration object with a high RCS (radar cross section), the object is made more detectable relative to other detected objects by moving it in a known manner. The processor that processes the radar signal then looks for anything moving in that known manner. In one embodiment, the object is simply rotated at a known frequency. The unique multiple tetrahedron shape is ideal for continually providing a known RCS response signal as the object is rotated, since multiple different tetrahedrons are visible as the object rotates. This provides the highest strength return when the corner reflector is facing the detector. It then decreases as the angle changes. This can be represented by a bell curve where the peak of the curve is when the reflector is perfectly pointing back to the detector. With the spinning motion, at the known frequency, the RCS response will be a sinusoidal curve at the same frequency.

The corner reflector 202 of FIGS. 2A-B will produce 4 peaks with each revolution. Peaks are provided for the 4 upper corners above divider 203, and/or for the 4 lower corners below divider 203. The use of upper and lower corners ensures that the corner reflector is visible regardless of the z vertical position of the sensor on the vehicle. It is desirable to have the frequency of rotation be slow enough so that it is within the acquisition capabilities (refresh rate) of the sensors. For example, if a lidar sensor has a 10Hz refresh rate, a lower frequency, such as the Nyquist frequency of 5 Hz or below, should be used. Current lidar sensors typically have a refresh rate between 10-30 frames per second (10-30 Hz). The corner reflector can either be rotated slower, or it could be constructed with fewer corners (e.g., 2 or 1) to reduce the frequency of detected peaks.

In alternate embodiments, other known movements could be used. For example, the object can be moved at a known speed, and/or known acceleration, and/or in a known direction. In some embodiments different combinations could be used, such as moving the object in a known direction at a known acceleration, or moving it in a known direction while rotating at a known frequency.

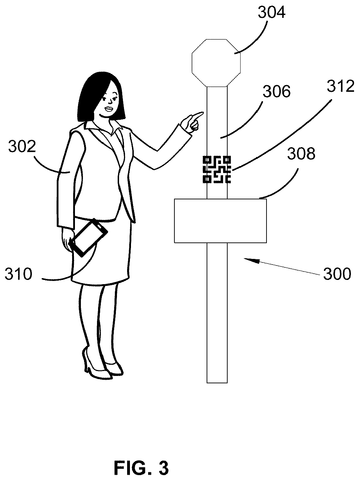

FIG. 3 is a diagram of a calibration apparatus 300 according to embodiments. A technician 302 holds a pole 306 with a mounted rotating radar corner reflector 304. The pole also has attached a localization device 308, such as a GNSS. Localization device 308 can have a display for technician 302, or a display on a smartphone 310 or another mobile device could be used, with a wireless connection to localization device 308. The location of calibration apparatus 300 relative to the vehicle's localization device (e.g., GNSS 118 of FIG. 1) is determined by wireless communication between the two. The various wireless connections can be by WiFi, Bluetooth^{®} wireless technology, cellular data, or any other wireless system. This provides the location in the vehicle frame grid 120, 122 of the localization device 308. The detected location of radar corner reflector 304, as detected by the lidar, radar, camera, or other sensors can then be compared and correlated. The radar corner reflector 304 can have one or more lidar reflectors mounted on it, such as one in each corner, or opposite a corner. A separate fixed camera target 312 can be attached to pole 306, so that it doesn't rotate. The camera target can be an April tag or other camera-recognizable target. The localization device 308 can have an Inertial Measurement Unit (IMU) or gyroscope, so its angle of inclination is known. In addition, the vertical height of radar corner reflector 304 above localization device 308 on pole 306 is known, allowing for adjustment of the z-axis detected location. Additionally, the height of the radar reflector and lidar reflector above camera target 312 is known, allowing for correlation to the other sensor targets and localization device 308.

Other embodiments could vary the structure of FIG. 3. A tripod could be used instead of pole 306, and the pole or tripod could be mounted on wheels to move around. A robot could be used instead, eliminating the need for technician 302. The robot could be programmed to move in a predetermined pattern, with several stops for a number of measurements. Alternately, the measurements can be done somewhat constantly as the robot or technician moves about. The technician may be sent instructions that are displayed on portable device 310 indicating where the technician should move next. In one example, the display is simply an arrow indicating the direction to move, with some indication of distance, such as a size of the arrow or a number of feet or meters that reduces as the technician approaches the next spot. In one embodiment, spots are chosen in the left and right portions of the sensor field of view (e.g., on either side of vehicle 104) and in embodiments also in front of the vehicle.

An IMU or accelerometer can be in the GNSS unit or separate. The measured tilt allows the angle of pole 306 to be determined. This can be subtracted from a total angle detected, with the remaining angle indicating a mounting angle of the sensor. A camera image of the April tag or other camera target can alternately be used to determine the angle of pole 306 (or other device). The distortion of the April tag will indicate the amount of tile. Essentially, the detected April tag image can be tilted in the computer until it matches the expected vertical April tag. The amount the image had to be tilted to match the stored, expected April tag pattern indicates the amount of tilt of pole 306.

In one embodiment, when the location of the calibration apparatus is detected using GNSS or another localization method, that location is conveyed to a processor analyzing the sensor data. An offset is applied for the position on the calibration apparatus, relative to the GNSS, of the target being searched for - a corner reflector for radar, a lidar reflector for lidar, or a target image for a camera. A bounding box around that location is constructed to limit the search area for the target. This limits the amount of processing needed and speeds up localization of the target. If the calibration target is not found, the size of the bounding box is increased until the calibration target is found. In an alternate embodiment, the bounding box can simply be placed around the height of the pole, throughout the width of the sensor image.

In embodiments, the radar corner reflector is made of stainless steel, or another material that is highly visible to radar. Reflective tape of different alternating colors can be placed over the corner detector. The reflective tape will be highly visible to a lidar sensor. Also, the changing colors of the reflective tape as the corner reflector is rotated will be easily detectable by a camera sensor, and can be used instead of an April tag. In one embodiment, alternating red and white reflective tape is used.

In embodiments, the position of each sensor relative to the localization sensor 118 is determined. From that data, the position of each sensor relative to each of the other sensors can be determined. The offset will include a combined effect due to the different location of the sensor compared to the GNSS and any misaligned angle of the sensor. The offset thus has both an X, Y, and Z distance component (from the GNSS) and an angle component.

In embodiments, multiple templates could be used for different areas of the FOV. By taking multiple measurements at different positions in the field of view, all positions can be determined using interpolation from the measured positions. Thus, an X, Y, Z offset can be determined for each position. This X, Y, Z offset combines the effects of the physical X, Y, Z distance between the radar sensor and the GNSS on the vehicle, and the effects of the angle at which the radar sensor is pointing.

In embodiments, the corner reflector ranges in size from less than an inch in diameter to 6 or 12 inches in diameter. The size of the corner reflector will determine the strength of the SNR and RCS return signal.

FIG. 4A is a diagram of the X, Y distribution grid of radar reflections for a static reflector. As can be seen, the radar reflection is faint and indistinct. FIG. 4B is a graph 402 of SNR v. time and a graph 404 of RCS v. time for a static object. As can be seen, the SNR in graph 402 is uneven, with it being difficult to distinguish the signal from the noise. The RCS of graph 404 is also difficult to see.

FIG. 5A is a diagram of the X, Y distribution grid of radar reflections for a rotating reflector. FIG. 5B is a graph 502 of SNR v. time and a graph 504 of RCS v. time for a rotating object. As can be seen, there are easily identifiable peaks where the corner reflector is perfectly in line with the radar sensor. Both the SNR and RCS are greatly improved.

Returning to FIG. 1, object 108 can be the corner reflector 202 of FIG. 2. For calibration, it is placed at a known X, Y, Z location relative to sensor 102. It is then rotated and detected by sensor 102. A processor analyzes the signals from sensor 102 and determines a detected X, Y, Z position of the detected object. The difference between the known location of the vehicle and the location of the calibration apparatus is used to find the extrinsic values between the sensor and the vehicle. The extrinsic values are an offset that is then used during the operation of the sensor to adjust the detected position of objects.

In embodiments, object 108 is moved to different positions, and the calibration comparison is repeated. Alternately, multiple objects are rotated and detected at the same time. If the offsets vary at different positions, the offsets are averaged or otherwise combined to provide the offset used for calibration.

In some embodiments, a lidar sensor is used in addition to a radar sensor. Lidar can be more accurate, while radar can better penetrate fog, dust and other obstructions. The lidar sensor can be similarly calibrated using a reflective target highly visible to lidar. If the lidar and radar targets are combined, the lidar can help more accurately detect the radar object and provide a more accurate offset for the radar sensor. The data from the lidar and radar sensors can be correlated. In addition, there can be a correlation among multiple ones of the same type of sensor (e.g. multiple radar or multiple lidars or multiple cameras), in addition to the correlation between different sensor modalities.

FIG. 6A is a diagram of a lidar reflector 602. A bike reflector or similar reflector could be used. It can be attached to the radar reflector calibration object 202. FIG. 6B is a graph of amplitude v. frequency showing the FFT of the average reflectivity in the area where the reflector is mounted. FIG. 6C is an X, Y graph showing a point cloud 604 returned by a lidar sensor with (X, Y) locations of corner reflector 202, relative to the sensor, as well as the reflectivity of the lidar reflector at point 606. The detected position of the lidar reflector 602 can be used to set up a bounding box or template matching to detect the calibration apparatus. The position of the lidar reflector on the corner reflector is known. A template for the lidar reflector is aligned with a template for the corner reflector to provide an expected position for the corner reflector. The processor receiving the radar sensor data then looks in the area of the corner reflector template, and/or a bounding box around the anticipated template position, to search for reflections from the corner reflector. In other embodiments, sensors which detect the calibration object can be used to set a bounding box for the other sensors. For example, since radar sensors are less expensive, a vehicle may have 2-6 radar sensors, and no lidar sensors. Depending on the calibration object location, the variances between each radar sensor, and other factors, one or two radar sensors may easily detect the calibration object, while other sensors are returning multiple ambiguous hits. The location of the calibration object in the field of view (FOV) of the sensor with a good detection is used to create a bounding box for the other sensors, and thus determine which of the multiple ambiguous hits is the correct one.

In one alternate embodiment, the rotation of radar reflector 202 is stopped for the lidar measurement. That ensures that the reflector is at a fixed position that does not move. The position of the lidar reflector 602 can be known from a measurement with respect to the lidar sensor. Since the lidar sensor can be mounted at a different location on a vehicle than the radar sensor, a known offset between the lidar and radar sensor can be subtracted from the radar offset.

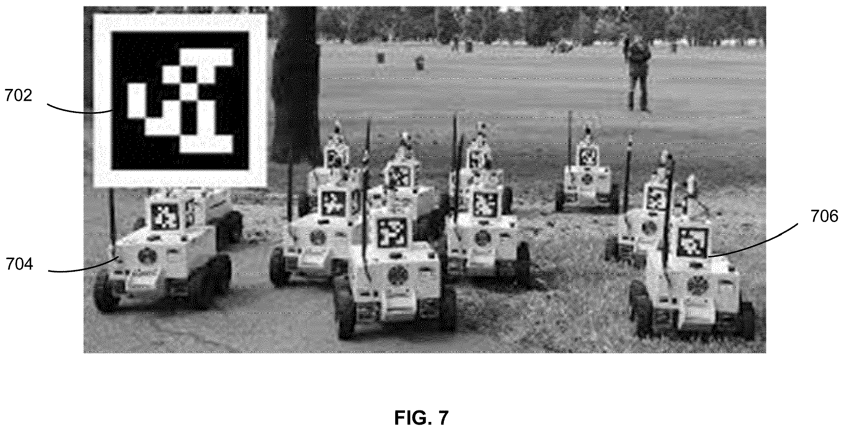

FIG. 7 is a diagram of camera targets for calibration, according to embodiments. A visual target 702 is an April tag, which is used for object identification and is easily distinguished from surrounding objects. Multiple objects 704, 706, etc. can have the same April tag, or alternate April tags. Alternately, a QR code, bar code, or other identifying feature can be used. A vehicle can have a camera sensor in addition to a radar and/or lidar sensor. The alignment of the camera can be calibrated using such visual tags in the same manner as described above, without rotating an object. For example, an April tag can be placed on a radar reflector or on a support for the radar reflector to more accurately identify the location of the radar reflector. Once the camera sensor has been calibrated, the determined camera sensor offset can be used to help calibrate a radar sensor and/or lidar sensor.

### Calibration Processing

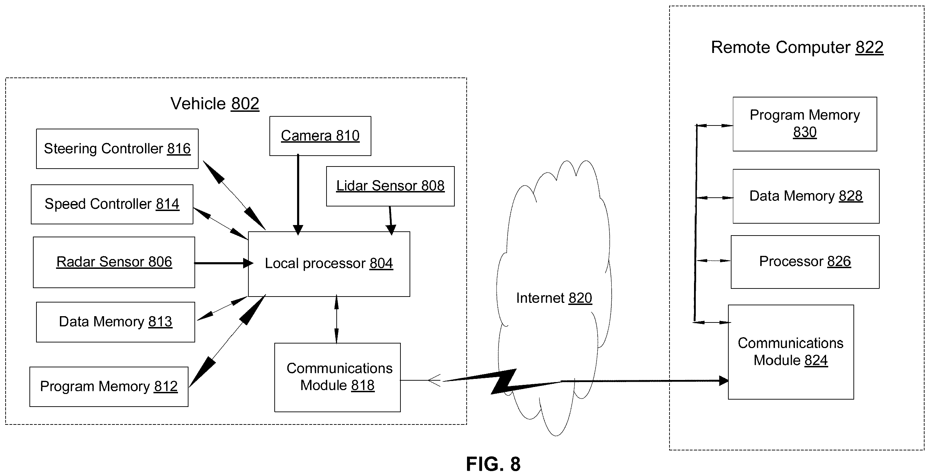

FIG. 8 is block diagram illustrating the electronics for the calibration, according to embodiments. A vehicle 802 has a processor 804 and one or more sensors, such as a radar sensor 806, lidar sensor 808 and camera sensor 810. Local processor 804 receives the sensor data and calculates the path for the vehicle and the times to slow down or stop to avoid obstacles. A data memory 812 and program memory 813, which can each be multiple memories, stores the data and software programs. Based on the processor calculations, appropriate control signals are sent to a speed controller 814 and a steering controller 816.

Processor 804 performs the calibration calculations described above, based on input from a user of the known target position as measured by hand, or by the GNSS calculations between the vehicle GNSS and the calibration apparatus GNSS. The finally calculated offset, or multiple offsets, is stored in data memory 813 and used in subsequent obstacle detection operations, which determine the control signals to speed controller 814 and steering controller 816.

In some embodiments, a communications module 818 provides communications over the internet 820 and/or other networks, to a remote computer 822. Remote computer 822 has its own communications module 824, processor 826, data memory 828 and program memory 830. Data memory 828 can store the offset as a backup. Data memory 828 can also store, in connection with each offset, the characteristics of each type of vehicle, including performance data depending upon conditions. Offset data from multiple vehicles of the same type and operating under the same conditions can be reviewed to isolate and fix problems. In one embodiment, if there is sufficient consistency in the offsets, vehicles without calibration targets being used can be calibrated in the same manner as the average of vehicles that are calibrated, on the assumption that they would have a similar offset due to factory installation or operating under similar conditions on the same type of equipment. Also, the locations of the sensors on other vehicles with the same arrangement of sensors can be used to set bounding boxes for each sensor to search for the calibration object, and can be downloaded to data memory 813.

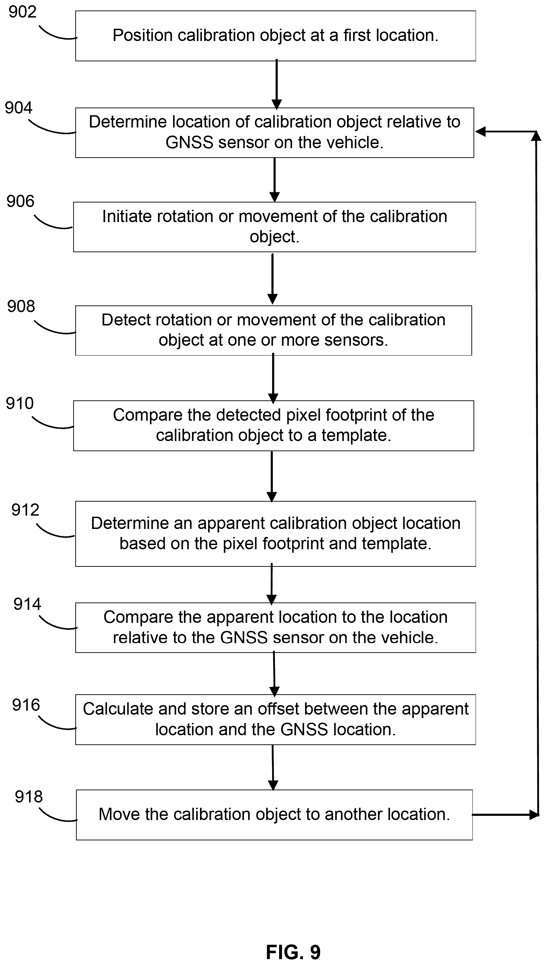

FIG. 9 is a flow chart illustrating the calibration process, according to embodiments. This process shows the high-level steps taken during calibration. First, position the calibration object at a first location (902). Next, determine the location of the calibration object relative to the GNSS sensor on the vehicle (904). Initiate rotation or movement of the calibration object (906). Detect rotation or movement of the calibration object at one or more sensors (908). Compare the detected pixel footprint of the calibration object to a template (910). Determine an apparent calibration object location based on the pixel footprint and template (912). Compare the apparent location to the location relative to the GNSS sensor on the vehicle (914). Calculate and store an offset between the apparent location and the GNSS location (916). Move the calibration object to another location (918). Repeat the process, starting at step 904.

### Computer System

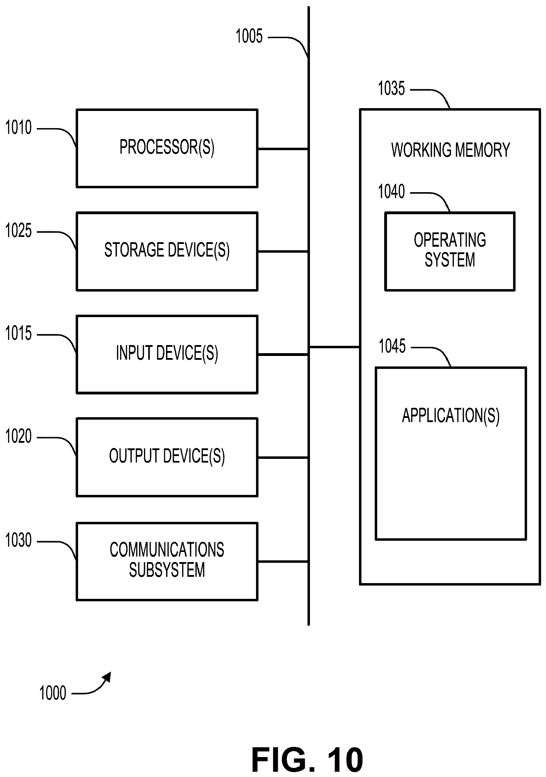

FIG. 10 illustrates a simplified computer system 1000, in accordance with some embodiments of the present disclosure. FIG. 10 provides a schematic illustration of one embodiment of computer system 1000 that can perform some or all of the steps of the methods provided by various embodiments. It should be noted that FIG. 10 is meant only to provide a generalized illustration of various components, any or all of which may be utilized as appropriate. FIG. 10, therefore, broadly illustrates how individual system elements may be implemented in a relatively separated or more integrated manner.

Computer system 1000 is shown comprising hardware elements that can be electrically coupled via a bus 1005, or may otherwise be in communication, as appropriate. The hardware elements may include one or more processors 1010, including without limitation one or more general-purpose processors and/or one or more special-purpose processors such as digital signal processing chips, graphics acceleration processors, and/or the like; one or more input devices 1015, which can include, without limitation a mouse, a keyboard, a camera, and/or the like; and one or more output devices 1020, which can include, without limitation a display device, a printer, and/or the like.

Computer system 1000 may further include and/or be in communication with one or more non-transitory storage devices 1025, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

Computer system 1000 might also include a communications subsystem 1030, which can include, without limitation a modem, a network card (wireless or wired), an infrared communication device, a wireless communication device, and/or a chipset such as a Bluetooth^{®} device, an 802.11 device, a Wi-Fi device, a WiMax device, cellular communication facilities, etc., and/or the like. The communications subsystem 1030 may include one or more input and/or output communication interfaces to permit data to be exchanged with a network such as the network described below to name one example, to other computer systems, and/or any other devices described herein. Depending on the desired functionality and/or other implementation concerns, a portable electronic device or similar device may communicate image and/or other information via the communications subsystem 1030. In other embodiments, a portable electronic device may be incorporated into computer system 1000, e.g., an electronic device as an input device 1015. In some embodiments, computer system 1000 will further comprise a working memory 1035, which can include a RAM or ROM device, as described above.

Computer system 1000 also can include software elements, shown as being currently located within the working memory 1035, including an operating system 1040, device drivers, executable libraries, and/or other code, such as one or more application programs 1045, which may comprise computer programs provided by various embodiments, and/or may be designed to implement methods, and/or configure systems, provided by other embodiments, as described herein. Merely by way of example, one or more procedures described with respect to the methods discussed above can be implemented as code and/or instructions executable by a computer and/or a processor within a computer; in an aspect, then, such code and/or instructions can be used to configure and/or adapt a general-purpose computer or other device to perform one or more operations in accordance with the described methods.

A set of these instructions and/or code may be stored on a non-transitory computer-readable storage medium, such as the storage device(s) 1025 described above. In some cases, the storage medium might be incorporated within a computer system, such as computer system 1000. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by computer system 1000 and/or might take the form of source and/or installable code, which, upon compilation and/or installation on computer system 1000 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware or software including portable software, such as applets, etc., or both. Further, connection to other computing devices such as network input/output devices may be employed.

As mentioned above, in one aspect, some embodiments may employ a computer system such as computer system 1000 to perform methods in accordance with various embodiments of the technology. According to a set of embodiments, some or all of the procedures of such methods are performed by computer system 1000 in response to processor 1010 executing one or more sequences of one or more instructions, which might be incorporated into the operating system 1040 and/or other code, such as an application program 1045, contained in the working memory 1035. Such instructions may be read into the working memory 1035 from another computer-readable medium, such as one or more of the storage device(s) 1025. Merely by way of example, execution of the sequences of instructions contained in the working memory 1035 might cause the processor(s) 1010 to perform one or more procedures of the methods described herein. Additionally, or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using computer system 1000, various computer-readable media might be involved in providing instructions/code to processor(s) 1010 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 1025. Volatile media include, without limitation, dynamic memory, such as the working memory 1035.

Common forms of physical and/or tangible computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 1010 for execution. Merely by way of example, the instructions may initially be carried on a magnetic disk and/or optical disc of a remote computer. A remote computer might load the instructions into its dynamic memory and send the instructions as signals over a transmission medium to be received and/or executed by computer system 1000.

The communications subsystem 1030 and/or components thereof generally will receive signals, and the bus 1005 then might carry the signals and/or the data, instructions, etc. carried by the signals to the working memory 1035, from which the processor(s) 1010 retrieves and executes the instructions. The instructions received by the working memory 1035 may optionally be stored on a non-transitory storage device 1025 either before or after execution by the processor(s) 1010.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

Example embodiments are presented in the itemized list below.
1. A method for calibrating a sensor, comprising:
   placing an object in a field of view of the sensor at a known location;
   moving the object in a known manner;
   detecting, with the sensor, an image moving in the known manner;
   determining an apparent location of the object from the image;
   comparing the apparent location to the known location to determine an offset;
      and
   storing the offset to adjust future detected locations of objects.
2. The method of item 1 wherein moving in a known manner comprises moving at a known frequency.
3. The method of item 2 wherein detecting an image comprises filtering by running a Fast Fourier Transform on a sequence of frames from the sensor to detect peaks at the known frequency.
4. The method of item 1 wherein the sensor is a radar sensor and the object is a radar reflector.
5. The method of item 1 wherein moving the object comprises rotating the object.
6. The method of item 1 wherein the sensor is a radar sensor and the object is a radar reflector, and further comprising:
   mounting the radar sensor and a lidar sensor on a vehicle;
   mounting a lidar reflector on the radar reflector;
   detecting an apparent location of the lidar reflector with the lidar sensor; and
   using the apparent location of the lidar detector to modify the apparent location of the radar reflector.
7. The method of item 1 wherein the sensor is a radar sensor and the object is a radar reflector, and further comprising:
   mounting the radar sensor and a camera sensor on a vehicle;
   mounting a camera target proximate the radar reflector;
   detecting an apparent location of the camera target with the camera sensor; and
   using the apparent location of the camera target to modify the apparent location of the radar reflector.
8. The method of item 1 wherein the object is part of a calibration system and the sensor is mounted on a vehicle, and further comprising:
   determining the known location by communication between the calibration system and a localization sensor mounted on the vehicle.
9. The method of item 8 wherein the localization sensor is a Global Navigation Satellite System (GNSS).
10. The method of item 1 further comprising repeating the steps of item 1 at multiple locations within a field of view of the sensor and determining multiple offsets for each of the multiple locations.
11. A method for calibrating a sensor mounted on a vehicle, comprising:
   placing an object on a calibration system in a field of view of the sensor;
   determining a location of the calibration system by communication between the calibration system and a localization sensor mounted on the vehicle;
   rotating the object at a first frequency;
   detecting, with the sensor, an image peaking at the first frequency;
   determining an apparent location of the object from the image;
   comparing the image to a template of the object;
   comparing the apparent location to the location of the calibration system and comparing the image to the template to determine an offset; and
   storing the offset to adjust future detected locations of objects.
12. The method of item 11 wherein the localization sensor is a Global Navigation Satellite System (GNSS) and the sensor is a radar sensor.
13. The method of item 11 further comprising repeating the steps of item 1 at multiple locations within a field of view of the sensor and determining multiple offsets for each of the multiple locations.
14. A non-transitory computer-readable medium having stored thereon instructions that, when executed by one or more processors, cause the one or more processors to perform operations, including:
   determining a location of an object relative to a localization sensor on a vehicle;
   providing instructions for movement of the object in a known manner;
   receiving, from a sensor on the vehicle, image data;
   detecting, from the image data, an object image moving in the known manner;
   determining an apparent location of the object from the object image;
   comparing the apparent location to the location of the object to determine an offset; and
   storing the offset to adjust future detected locations of objects.
15. The non-transitory computer-readable medium of item 14 wherein moving in a known manner comprises moving at a known frequency.
16. The non-transitory computer-readable medium of item 15 wherein detecting an object image comprises filtering by running a Fourier Transform on a sequence of frames from the sensor to detect peaks at the known frequency.
17. The non-transitory computer-readable medium of item 15 wherein the sensor is a radar sensor and the object is a radar reflector.
18. The non-transitory computer-readable medium of item 15 wherein moving the object comprises rotating the object.
19. The non-transitory computer-readable medium of item 14 wherein the localization sensor is a Global Navigation Satellite System (GNSS).
20. The non-transitory computer-readable medium of item 14 further comprising instructions including:
   receiving lidar image data from a lidar sensor mounted on the vehicle;
   detecting an apparent location of a lidar detector on the object from the lidar image data; and
   using the apparent location of the lidar detector to modify the apparent location of the object.

## Claims

1. A method for calibrating a sensor, comprising:
placing an object in a field of view of the sensor at a known location;
moving the object in a known manner;
detecting, with the sensor, an image moving in the known manner;
determining an apparent location of the object from the image;
comparing the apparent location to the known location to determine an offset; and
storing the offset to adjust future detected locations of objects.

2. The method of claim 1 wherein moving in a known manner comprises moving at a known frequency.

3. The method of claim 2 wherein detecting an image comprises filtering by running a Fast Fourier Transform on a sequence of frames from the sensor to detect peaks at the known frequency.

4. The method of claim 1 wherein the sensor is a radar sensor and the object is a radar reflector.

5. The method of claim 1 wherein moving the object comprises rotating the object.

6. The method of claim 1 wherein the sensor is a radar sensor and the object is a radar reflector, and further comprising:
mounting the radar sensor and a lidar sensor on a vehicle;
mounting a lidar reflector on the radar reflector;
detecting an apparent location of the lidar reflector with the lidar sensor; and
using the apparent location of the lidar detector to modify the apparent location of the radar reflector.

7. The method of claim 1 wherein the sensor is a radar sensor and the object is a radar reflector, and further comprising:
mounting the radar sensor and a camera sensor on a vehicle;
mounting a camera target proximate the radar reflector;
detecting an apparent location of the camera target with the camera sensor; and
using the apparent location of the camera target to modify the apparent location of the radar reflector.

8. The method of claim 1 wherein the object is part of a calibration system and the sensor is mounted on a vehicle, and further comprising:
determining the known location by communication between the calibration system and a localization sensor mounted on the vehicle.

9. The method of claim 8 wherein the localization sensor is a Global Navigation Satellite System (GNSS).

10. The method of claim 1 further comprising repeating the steps of claim 1 at multiple locations within a field of view of the sensor and determining multiple offsets for each of the multiple locations.

11. A method for calibrating a sensor mounted on a vehicle, comprising:
placing an object on a calibration system in a field of view of the sensor;
determining a location of the calibration system by communication between the calibration system and a localization sensor mounted on the vehicle;
rotating the object at a first frequency;
detecting, with the sensor, an image peaking at the first frequency;
determining an apparent location of the object from the image;
comparing the image to a template of the object;
comparing the apparent location to the location of the calibration system and comparing the image to the template to determine an offset; and
storing the offset to adjust future detected locations of objects.

12. The method of claim 11 wherein the localization sensor is a Global Navigation Satellite System (GNSS) and the sensor is a radar sensor.

13. The method of claim 11 further comprising repeating the steps of claim 11 at multiple locations within a field of view of the sensor and determining multiple offsets for each of the multiple locations.

14. A non-transitory computer-readable medium having stored thereon instructions that, when executed by one or more processors, cause the one or more processors to perform operations, including:
determining a location of an object relative to a localization sensor on a vehicle;
providing instructions for movement of the object in a known manner;
receiving, from a sensor on the vehicle, image data;
detecting, from the image data, an object image moving in the known manner;
determining an apparent location of the object from the object image;
comparing the apparent location to the location of the object to determine an offset; and
storing the offset to adjust future detected locations of objects.

15. The non-transitory computer-readable medium of claim 14 wherein moving in a known manner comprises moving at a known frequency, preferably comprising rotating the object.
